## Europäisches Patentamt
## European Patent Office
## Office européen des brevets

(11) Publication number: **0 105 979**
**B1**

## EUROPEAN PATENT SPECIFICATION

(45) Date of publication of patent specification: **11.06.86**

(21) Application number: **82305322.8**

(22) Date of filing: **06.10.82**

(51) Int. Cl.⁴: **G 01 B 5/12, G 01 B 7/12**

(54) Head for bore gauge.

(43) Date of publication of application:
**25.04.84 Bulletin 84/17**

(45) Publication of the grant of the patent:
**11.06.86 Bulletin 86/24**

(84) Designated Contracting States:
**CH DE GB IT LI SE**

(56) References cited:
**DE-A-2 813 842**
**DE-A-3 001 634**
**DE-B-2 543 779**
**US-A-4 030 202**

(73) Proprietor: **Federal Products Corporation**
**1144 Eddy Street**
**Providence Rhode Island 02901 (US)**

(72) Inventor: **Miller, Mark II**
**8A Cindy Circle**
**Johnston Rhode Island 02919 (US)**

(74) Representative: **Feakins, Graham Allan et al**
**Haseltine Lake & Co. Hazlitt House 28,**
**Southampton Buildings Chancery Lane**
**London WC2A 1AT (GB)**

## Description

This invention relates generally to a new and improved head assembly for use with bore gauges of mechanical or electronic construction according to the precharacterising part of claim 1 or claim 9.

Such a bore gauge is an instrument designed to measure inside diameters of various cylindrical bores and is well known from the disclosure DE—B—2 543 779. Machinists, for example, frequently need to make precise measurements of the diameter of a bore being cut into a workpiece. Since the sensing contact of a bore gauge typically has a relatively small range of motion, the effective measurement range of the instrument can be increased by providing an extensible stem directly opposite the sensing contact of the gauge. Such stems heretofor there have been in the form of screws that are turned in or out as required with the particular setting being established by inserting the head of the bore gauge in a reference ring selected to correspond approximately with the diameter of the bore to be measured. Once the bore gauge has been set in the reference ring, the head of the instrument is then inserted in the bore itself and a reading is made, typically on a dial indicator mechanically connected to the measuring head.

While this type of instrument is known in the art as exemplified by the following U.S. patents: 3,418,720, 3,442,020, 3,422,540, 4,030,202 and 4,170,831, these instruments have been somewhat difficult to use and maintain. For example, the initial setting of the extensible stem is quite slow and may require several adjustments before the stem is correctly extended and locked as by turning a locking nut, which sometimes will cause an accidental movement of the stem. Also, the contacts used both for centralizing the instrument along the diameter of the bore as well as the measuring contacts themselves tend to wear rather rapidly. Likewise other moving parts tend to experience rather rapid wear resulting in deterioration in the accuracy of the instrument. A further disadvantage of existing bore gauges of this type has been the tendency of parts to become clogged with debris insofar as the instruments are used frequently around machining operations where liquid coolants and the like may be present.

Accordingly, it is a general object of this invention to provide improvements in bore gauges. Another object of this invention is to provide a measuring head for a bore gauge adapted to actuate either a mechanical instrument such as a dial indicator or an electrical instrument such as a linear variable differential transformer coupled to an electronic digital display. A further object of this invention is to provide in a bore gauge a head that may be quickly and easily set in a reference ring prior to use in measuring a bore. Still another object of this invention is to provide in a bore gauge a head that is easily cleaned, is long wearing and requires a minimum amount of maintenance while providing very reliable, repeatable and precise measurements.

According to the present invention, these objects are met by a head for a bore gauge having a movable member therein adapted to produce an indication of measurement corresponding to the extent of displacement of said member, a body and connecting means for operatively connecting said body to said gauge, said head being characterised by the features in the characterising part of claim 1 or of claim 9.

For a better understanding of the invention and to show how the same may be carried into effect, reference will now be made by way of example, to the accompanying drawings, in which:—

Figure 1 is a view in perspective showing a bore gauge head in use with a dial indicator,

Figure 2 is a view similar to Fig. 1 but showing the head in use with a linear variable differential transformer,

Figure 3 is an exploded perspective view of the head,

Figure 4 is a detailed side elevation showing the sensitive finger and transfer rod arrangement,

Figure 5 is an end view of the head assembly in a setting ring,

Figure 6 is a detailed showing of the rack and pinion arrangement for the adjustable stem,

Figure 7 is a top plan view of the wedge locking mechanism for the Figure 6 device,

Figure 8 is a view in side elevation of the transfer rod,

Figure 9 is a bottom plan view thereof,

Figure 10 is a top plan view thereof,

Figure 11 is an end view of the transfer rod together with the support pin associated therewith,

Figure 12 is a top plan view of the head assembly,

Figure 13 is a view in side elevation thereof partly broken away, and

Figure 14 is an end view of the head.

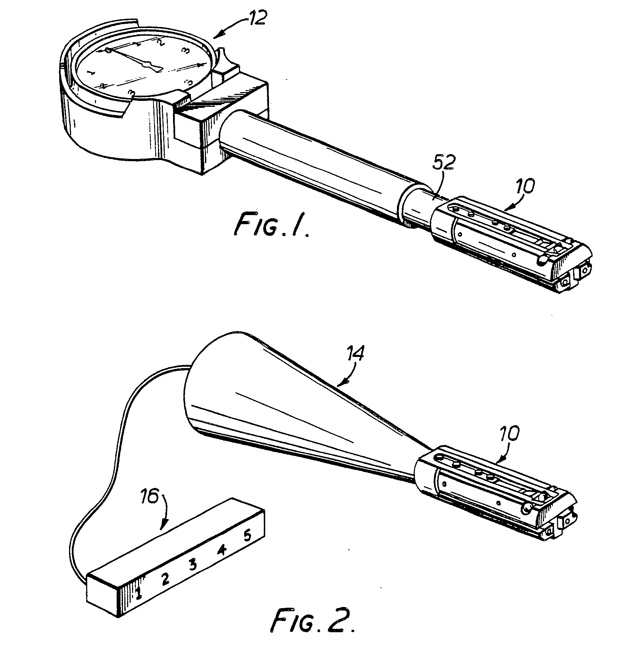

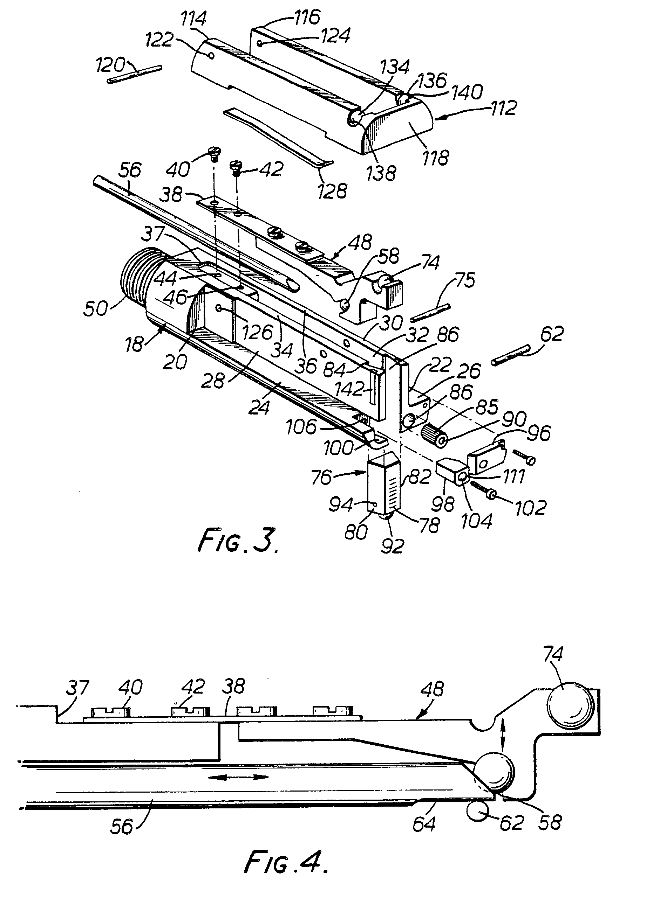

Referring now to the drawings, the reference character 10 generally indicates a bore gauge head adapted for use with a dial indicator 12, as shown in Fig. 1, or with linear variable differential transformer 14 having a digital electronic display 16, as suggested in Fig. 2. In either event, the head assembly is organized about a body 18, best shown in Fig. 3, of generally cylindrical contours at the rearward or left hand end thereof, but formed with matching cutaway portions 20 and 22 extending forwardly along both sides of the body to define a pair of longitudinal flat shoulders 24 and 26. The cutaway portions 20 and 22 also define a pair of flat faces 28 and 30 perpendicular to the shoulders 24 and 26. The body 18 is also bifurcated lengthwise by a longitudinal slot 32 extending from the cylindrical inner portion to the distal end thereof to form thereby a pair of spaced parallel walls 34 and 36. Communicating with the slot 32 is a shallow recess 37 at the inner end of the body at the base of the slot to receive a leaf spring 38 fastened by screws 40 and 42 threaded into cooperating tapped holes 44 and 46 in the face of the recess 37. The leaf spring 38 serves as a pivotal and resilient support for a sensing finger 48 dimensioned to fit with ample clearance within the slot 32.

The body 18 is also formed with a threaded neck 50 at the left hand inner end thereof for mounting the head assembly to an extension shank 52 of a dial indicator, as shown in Fig. 1 or to an end of the LVDT as shown in Fig. 2.

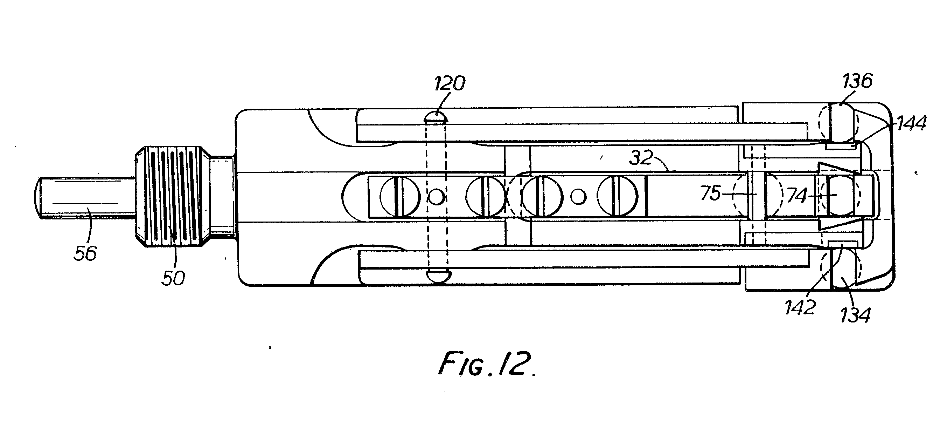

The body is also formed with an axial passage 54 extending through the neck 50 and into the slot 32 to slidably receive a transfer rod 56 shown in detail in Figs. 8 to 11. The left hand end of the transfer rod 56, as viewed in the drawings, is adapted drivingly to engage an actuating stem on the dial indicator 12 or the movable part of the LVDT 14. The right hand end of the transfer rod drivingly engages a hard metal ball 58 carried by the sensitive finger 48 and shown best in Fig. 4. It will be understood that any motion of the sensitive finger 48 about its flex joint provided by the leaf spring 38, which motion will be arcuate, will be converted to a linear motion *via* the ball 58 to the transfer rod which will move along the axis of the rod and thereby produce a readout on the dial indicator, LVDT, or the like.

The transfer rod 56 at its left hand end rides in a bushing 60 typically bronze or the like, while the right hand end is supported on one side by means of a pin 62 mounted transversely to the body 18 near the forward end thereof and across the lower part of the slot 32. The distal end of the transfer rod 56 is formed with a smooth lower face 64 bearing against the pin 62 and formed with a central longitudinal groove 66 defining a pair of parallel longitudinal narrow lands 68 and 70. The generally flat face 64 serves to prevent rotation of the transfer rod 56 while the groove and land configuration of the face 64 minimizes displacement of the rod in the event of imperfections or the presence of foreign matter between the transfer rod and the pin 62.

The two lands 68 and 70 on the face 66 are flat ground and provide line contact with the pin 62. This arrangement tends to be self-cleaning and prevents sludge from building up in this area. Also, by using two flat lands spaced from one another a stabilizing effect is achieved. This also reduces the effect of asperity on the pin bearing surface. If a single flat surface were employed the effect on the rod from any asperity on the pin bearing surface would be substantially double that which would be produced using the groove and land configuration employed in the present invention. Any asperity present on the pin along the centre line of the travel of the transfer rod will have no effect on the transfer rod since it will be in the clearance provided by the groove 66. If a flat surface were used with no central groove, obviously any such central asperity would cause a maximum disturbance on the rod. Any asperity present under one of the lands will have the minimum effect on the rod and would be the same if the face were totally flat. Thus, the total effect on the rod using a centrally grooved face will be approximately one-half that which would result from using a completely flat surface.

The forward end of the transfer rod is formed with a single Vee-groove 72 diagonally across the tip to bear against the ball 58 shown in Fig. 4. Lapped into the Vee-groove is a pair of parallel semi-cylindrical shallow grooves 59 in which the ball 58 moves and which ensure that the ball 58 always rides in the same track and greatly improves the durability of the instrument.

At the top forward portion of the finger 48 is mounted a sensitive ball contact 74 which is adapted to engage the work surface and through which the finger is biased and the transfer rod 56 moved to actuate the dial indicator. It will be understood that the arcuate motion of the finger 48 will be translated to a linear motion of the transfer rod 56 which, in turn, will produce a measurement display on the dial indicator or digital readout. Both the sensitive ball contact 74 as well as the ball 58 are replaceable in the event that either or both become worn. Upward movement of the sensitive finger 48 is limited by means of a cross pin 75 mounted to the body across the slot 32.

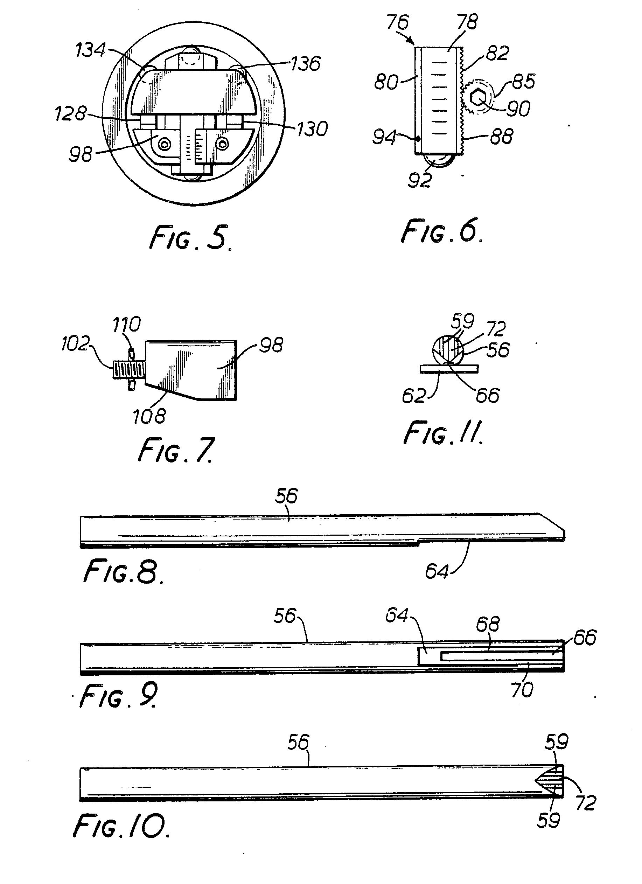

At the forward tip of the body 18 an extensible stem 76 is mounted for limited movement along a path perpendicular to the length of the body and in line with the sensitive ball contact 74. The stem 76, in the illustrated embodiment is formed with a flat forward face 78, which may be inscribed with graduated markings, and with tapered side walls 80 and 82 forming a wedge configuration that fits smoothly within a guideway formed in the inside faces of the body walls 34 and 36 near the tip. The guideway is comprised of a pair of oppositely facing tapered grooves 84 and 86 which receive the tapered sidewalls 80 and 82 of the stem. The stem is slidably mounted within the groove but its position within the guideway is controlled by means of a pinion 85 rotatably mounted in a corresponding socket 86 formed in the forward tip of the body adjacent to the guideway and in mesh with rack teeth 88 formed along the face 82 of the stem, as best shown in Fig. 6.

The pinion is provided with a hex socket 90 to receive one end of a hex wrench by means of which the pinion may be rotated and thereby move the stem in or out as required in making a preliminary setting of the stem prior to performing a measuring operation. In place of a socket 90 the exposed end may also be slotted or formed with a cross to receive a screwdriver or similar tool to rotate the pinion. In either event the rotation of the pinion and the adjustment of the stem may be carried out with the instrument in place within a setting ring rather than going through a number of adjustments required for conventional screw-type stems common in the art. The lower end of the stem 76 is provided with a ball contact 92 pressed into a cooperating socket formed within the lower end of the stem. The ball may be replaced by forcing the ball out of its socket by inserting a narrow tool into an opening 94 formed in the stem adjacent the upper part of the ball 92.

Mounted on the forward face of the body is a plate 96 which extends partially over the face 78 of the stem and bears Vernier scale markings along the margin thereof by means of which the position of the stem may be visually determined. It will be understood that the stem 76 may be provided in several different lengths for each instrument and that the stems are readily replaced depending upon the dimensions of the work being measured. Once the stem position has been adjusted, it may be locked in position by means of a locking wedge 98. The wedge 98 is mounted within a cutaway portion 100 adjacent to the guideway for the stem and opposite the pinion and is held by means of a locking screw 102 which passes through an opening 104 through the wedge and threadably engages a tapped socket 106 at the rear of the cutaway portion 100. The wedge is formed with a tapered face 108 adapted to engage the tapered face 80 of the stem and by tightening the screw 102 the wedge can lock the stem without causing any disturbance in the position of the stem, holding it firmly in place during measuring operations. The screw 102 is formed with a hex socket in the end thereof or may be provided with a conventional screw head for manipulation by a conventional screwdriver or the like. In practice, an annular spring washer 110 may be mounted on the inner end of the screw 102 between the wedge 98 and the portion around the tapped hole 106 so as to automatically release the wedge when the screw is loosened and permit readjustment of the stem when required. The face 108 preferably is formed with a shallow groove 111 along the centre thereof which defines two flats on the wedging face. This increases bearing pressure on the stem and makes the stem more stable. If a simple flat surface on the wedging face were used any slight rounding of the face would produce a line contact with stem and possible rocking thereof.

Also mounted to the body 18 and forming part of the head assembly is a U-shaped centraliser arm 112 comprised of a pair of parallel legs 114 and 116 joined by a cross-portion 118. The centraliser arm 112 is pivotally connected to the body portion by means of a pin 120 secured in cooperating holes 122 and 124 of the legs and passing through a hole 126 formed in the body near the rear of the cutaway portions 20 and 22. Preferably, the outer surfaces of the legs 114 and 116 are curved to conform with the overall cylindrical curvature of the body and thereby eliminate any outward projection that might interfere with the taking of measurements in a bore. The dimensions of the legs are such that the centraliser arm fits snugly within the cutaway portions 20 and 22 yet with adequate clearance with the surfaces of the cutaway portions as to allow for free and easy movement of the arm without binding, particularly in the presence of debris, liquid coolants, or the like, that may find their way into the head assembly during normal use of the instrument. The centraliser arm 112 is normally biassed in a counterclockwise direction, as viewed in Figs. 1 and 13, by means of a pair of leaf springs 128 and 130 secured at their inner ends to the lower faces of the arms 114 and 116, respectively, with their forward ends extending diagonally downwards and forwards to terminate in an upwardly curved tip and bearing against the longitudinal shoulders 24 and 26 of the cutaway portions 20 and 22. The upward motion of the centraliser arm 112 is limited by means of a set of screw 132 threaded through a tapped opening near the rear of the body 18 with its inner end engaging an inner-most end of one of the legs of the centraliser arm rearwardly of the pivot pin 120, as best shown in Fig. 13. Other means may be provided for limiting the movement of the centraliser arm such as a strut or pin extending across the top of the body over the slot 32, for example. Also, in place of the leaf springs illustrated, other spring means may be provided such as a coil spring arrangement which might extend lengthwise within the body to engage the arm at one end and a fixed portion of the body at another end to provide a bias to the arm.

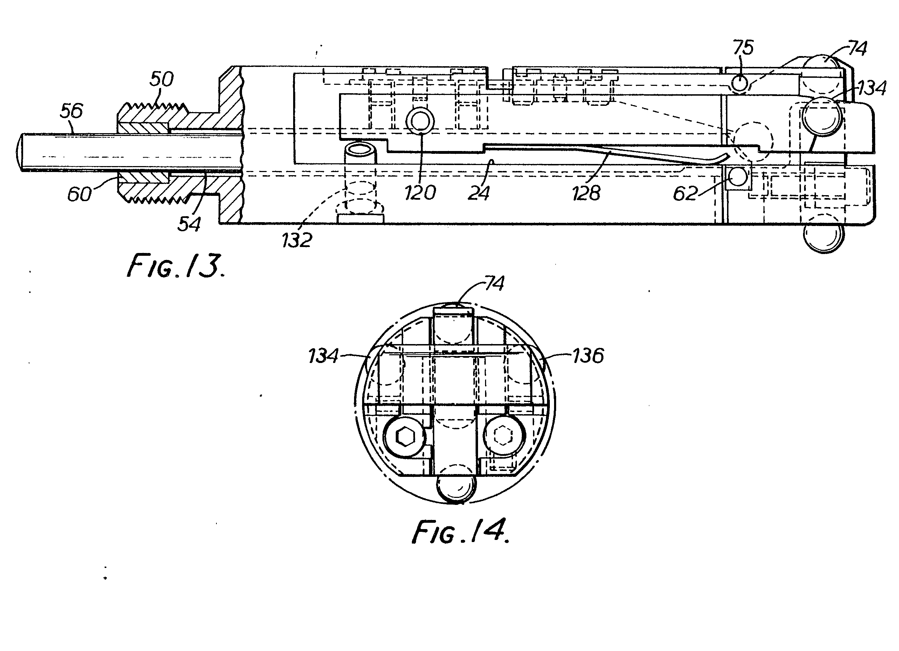

At the forward portion of the centraliser arm near the cross portion 18 is a pair of centraliser balls 134 and 136 mounted for limited transverse movement within semicylindrical grooves 138 and 140, respectively, oriented transversely of the arm. The depth of the grooves is such that a portion of both balls 134 and 136 extends outwardly from the centraliser arm, as best shown in Figs. 5 and 14, in position to bear against the cylindrical inner face of a bore or reference ring. By mounting the balls 134 and 136 for a limited movement transversely of the arm, they are able simultaneously to bear against the cylindrical wall of the bore and the forward portion of the body 18 along the walls 28 and 30. This ensures very precise positioning of the instrument along the diameter of a bore and locates exactly the measure-making components of the instrument along the diameter of the bore. If the centraliser balls did not bear against the body 18 or were fixed to the centraliser arm, any play between the parts, especially between the arm and the body, could result in the sensing finger 48 being slightly off-centre during the actual measurement with resulting error. However, by mounting the balls 134 and 136 for limited movement within their respective grooves, they will during a centralising operation and subsequent measurement procedure, engage the walls 28 and 30 of the body as well as the bore walls, holding measuring contacts in a plane precisely along the diameter of the bore. In order to reduce wear on the body, particularly along the lines of contact between the balls 134 and 136 and the body, inserts 142 and 144 of a hard metal such as tungsten carbide or the like may be set into the walls 28 and 30, as best shown in Figs. 3 and 12. Alternatively, the surface of the walls 28 and 30 along the lines of contact with the centraliser balls may be work hardened during the fabrication of the head assembly. This may be done by pressing the balls tightly against the walls 28, 30 and moving the centraliser arm 112 repeatedly up and down to burnish in a track for the balls.

The instrument is used in the following manner; assuming the proper extension stem 76 is in place, the head is inserted in a selected reference ring and the centraliser arm will locate the sensitive elements, namely the ball contacts 74 and 92 along the diameter of the reference ring. The stem 94 is moved in or out as required to adjust the instrument to the reference ring, this being done with the head assembly in place and by simply turning the pinion 84 one way or the other. Once the extent of the stem is selected, the stem is locked in position by tightening up the screw 102 to engage the wedge 98. The instrument is then withdrawn from the reference ring and inserted in the bore that is to be measured. The centraliser balls will precisely orient the instrument in a plane along the diameter of the bore and the axial centre line of the bore is established by rocking the instrument slightly up and down within the bore to define the smallest measurement on the dial indicator or other measuring instrument. This will represent the precise diameter of the bore.

## Claims

1. A head for a bore gauge having a movable member therein adapted to produce an indication of measurement corresponding to the extent of displacement of said member, a body (18), and connecting means for operatively connecting said body to said gauge, said head being characterised by a transfer rod (56) mounted for limited longitudinal movement in said body and drivingly connected at one end to said member, a bore-engaging sensing member (48) movably mounted to the distal end of said body and drivingly connected to the other end of said rod (56), an adjustable bore-engaging element (76) mounted to the distal end of said body on the opposite side of said head in diametrical alignment with said sensing member, manually actuated rack and pinion means (85, 88) operatively associated with said element for extending and retracting said element (76) diametrically to and away from said body and, centralizing means (112) connected to said body for engaging the walls of said bore and positioning said sensing member and said element along the diameter of said bore.

2. A head according to claim 1, characterised in that said rack and pinion means includes rack teeth (88) formed lengthwise of said element (76) parallel to the path of travel thereof and a pinion (85) rotatably mounted in the distal end of said body and in mesh with said rack teeth, said pinion being manually rotatable from said distal end.

3. A head according to claim 2, characterised by locking means mounted to said body and engageable with said element for locking said element at a selected position, said locking means including a wedge (98) mounted in said distal end adjacent said element and engageable therewith, and a screw (102) extending through said wedge and threaded to said body, whereby said wedge may be selectively tightened against said element and loosed therefrom.

4. A head according to claim 3, characterised in that said wedge is formed with an element-engaging face (108) having at least one groove (111) defining at least a pair of lands in position to engage said element, and spring means (110) being operatively mounted between said wedge and said body for normally urging said wedge into a loosed position.

5. A head according to claim 1 characterised in that said other end of said transfer rod is formed with a diagonally extending V-groove (72), said sensing member being resiliently and pivotally mounted to said body and including a spherical portion (58) seated in said groove whereby any pivotal movement of said sensing member is converted to a linear movement of said rod, and wherein a support member is mounted to said body transversely of said rod and engages said rod along one side thereof adjacent said other end and opposite said groove to provide sliding support for said rod, said rod being formed with a generally flat face (64) along said one side, said face being formed with a longitudinal groove (66) and a pair of spaced parallel narrow longitudinal ribs (68, 70) slidably engaging said support member, said support member being a rigid cylindrical pin (62).

6. A head according to claim 5 characterised by a first hard ball contact (74) mounted to said sensing member in position to engage said bore and diametrically opposite said adjustable element, a second hard ball contact (92) at the outer end of said adjustable element in position to engage said bore and diametrically opposite said first ball contact, and a leaf spring (38) connecting said sensing member to said body, said leaf spring extending generally parallel to said rod and in position to deflect to and away from said rod.

7. A head according to claim 1 characterised in that said centraliser means (112) includes a U-shaped arm having a pair of paralleled legs (114 and 116) and a cross-piece (118) at one end thereof, pivot means connecting the other end of said legs to said body with said legs extending generally parallel to said rod and along opposite sides of said body and with said cross-piece disposed proximately to the distal end of said body, and spring means between said arm and said body urging said one end of said arm away from the distal end of said body.

8. A head according to claim 7 characterised in that said arm is formed with a groove (138, 140) in each leg thereof at said one end and extending transversely of said legs, a centralising ball (134, 136) mounted for limited transverse movement in each of said grooves, each of said centralising balls having a portion thereof extending outwardly of its respective groove to simultaneously bear against said body and said bore when said head is within said bore, said centralising balls and said first and second ball contacts being disposed in the same plane, said body including a hardened metal track (142, 144) adjacent each of said centralising balls for engagement therewith, there being stop means operatively connected to said head for limiting the movement of said arm about said pivot means, and a semi-cylindrical groove formed lengthwise in each face of said V-groove to define a pair of spaced parallel semi-cylindrical grooves along which said spherical portion is adapted to move.

9. A head for a bore gauge having a movable member therein adapted to produce an indication of measurement corresponding to the extent of displacement of said member, a body, and connecting means for operatively connecting said body to said gauge, said head being characterised by a transfer rod mounted for limited longitudinal movement in said body and drivingly connected at one end to said member, a bore engaging sensing member movably and resiliently mounted to the distal end of said body and at one side thereof and drivingly connected to the other end of said rod, an adjustable bore-engaging element mounted to the distal end of said body on the opposite side of said head in diametrical alignment with said sensing member, a U-shaped centralising arm having a pair of parallel legs and a cross-piece at one end thereof, pivot means connecting the other ends of said legs to said body with said legs extending generally parallel to said rod and along opposite sides of said body and said element and with said cross-piece disposed proximately to the distal end of said body, spring means connected between said arm and said body urging said one end of said arm away from the distal end of said body, said arm being formed with a groove in each leg thereof at said one end and extending transversely of said legs, and a centralising ball mounted for limited transverse movement in each of said grooves, each of said centralising balls having a portion thereof extending outwardly of the respective groove to simultaneously bear against said body and said bore when said head is within said bore.

10. A head according to claim 9 characterised in that said body includes a hardened metal track adjacent each of said centralising balls for engagement therewith, stop means is operatively connected to said head for limiting the movement of said arm about said pivot means, said other end of said transfer rod being formed with a diagonally extending V-groove, said sensing member being pivotally mounted to said body and including a spherical portion seated in said groove whereby any pivotal movement of said sensing member is converted to a linear movement of said rod, a support member being mounted to said body transversely of said rod and engaging said rod along one side thereof adjacent said other end and opposite said groove to provide sliding support for said rod, said rod being formed with a generally flat face along said one side, said face being formed with a longitudinal groove and a pair of spaced parallel narrow longitudinal ribs slidably engaging said support member, said support member being a rigid cylindrical pin, a first hard ball contact being mounted to said sensory member in position to engage said bore and diametrically opposite said adjustable element, a second ball contact being at the outer end of said adjustable element in position to engage said bore and diametrically opposite said first ball contact, a leaf spring connecting said sensing member to said body, said leaf spring extending generally parallel to said rod and in position to deflect to and away from said rod, said centralising balls and said first and second ball contacts being disposed in the same plane and a semi-cylindrical groove being formed lengthwise in each face of said V-groove to define a pair of spaced parallel semi-cylindrical grooves along which said spherical portion is adapted to move.

**Patentansprüche**

1. Kopf für ein Bohrungsstichmass mit einem beweglichen Teil ausgebildet, um eine dem Wert der Verschiebung des Teiles entsprechende Massangabe zu liefern, einem Körper (18) und Verbindungsmitteln, um betriebsmässig den Körper mit dem Stichmass zu verbinden, gekennzeichnet durch eine Uebertragungsstange (56), die im Körper für eine begrenzte Längsbewegung montiert ist und bewegungsmässig an einem Ende mit dem beweglichen Teil verbunden ist, ein in die Bohrung einsetzbares Tastglied (48), welches am äusseren Ende des Körpers montiert ist und mit dem anderen Ende der Stange (56) bewegungsmässig verbunden ist, ein einstellbares, in der Bohrung einsetzbares Fühlglied (76), welches am äseren Ende des Körpers auf der entgegengesetzten Seite des Körpers in diametraler Ausrichtung mit dem Tastglied montiert ist, ein von Hand betätigtes Getriebe mit Ritzel und Zahnstange (85, 88), welches betriebsmässig mit dem Tastglied verbunden ist, um es in bezug auf den Körper diametral zu entfernen und anzunähern, und Zentriermittel (112), welche mit dem Körper verbunden sind, um mit den Wänden der Bohrung in Kontakt zu kommen und das Tastglied und das einstellbare Fühlglied auf dem Durchmesser der Bohrung zu positionnieren.

2. Kopf gemäss Anspruch 1, dadurch gekennzeichnet, dass das Getriebe eine entlang und parallel zum Bewegungsweg des Fühlgliedes angebrachte Zahnstange (88) und ein am äseren Ende des Körpers drehbar angebrachtes und mit der Zahnstange verzahntes Ritzel umfasst, wobei das Ritzel vom äusseren Ende aus von Hand drehbar ist.

3. Kopf gemäss Anspruch 2, gekennzeichnet durch Blockiermittel, die auf dem Körper montiert sind und im Eingriff mit dem in einer gewählten Lage eingestellten Fühlglied gebracht werden können, wobei die Blockiermittel einen am äusseren Ende montierten, an das Fühlglied anliegenden und mit ihm in Eingriff bringbaren Keil (98) und eine den Keil durchquerende und in den Körper eingeschraubte Schraube (102) umfassen, wobei dieser Keil nach Wahl gegen das Fühlglied angezogen oder gelockert werden känn.

4. Kopf gemäss Anspruch 3, dadurch gekennzeichnet, dass die Seite (108) des Keils, die mit dem Fühlglied in Eingriff bringbar ist, mindestens eine mindestens ein Paar Eingriffsfelder bildende aufteilende Rille (111) besitzt, wobei die Eingriffsfelder mit dem Fühlglied zusammenwirken, und dass betriebsmässig eine Feder (110) zwischen dem Keil und dem Körper montiert ist, um normalerweise den Keil in die gelockerte Lage zu zwingen.

5. Kopf gemäss Anspruch 1, dadurch gekennzeichnet, dass dieses andere Ende der Uebertragungsstange eine sich diagonal ausdehnende V-Rille (72) aufweist, dass das Tastglied federnd und drehbar am Körper befestigt ist und einen in dieser Rille sitzenden kugelförmigen Abschnitt (58) aufweist, wobei jede Drehbewegung des Tastgliedes eine lineare Bewegung der Stange bewirkt und wobei ein Tragstück am Körper quer zur Stange montiert ist und mit dieser Stange auf einer ihrer Seiten und an diesem anderen Ende anliegend und dieser Rille entgegengesetzt im Eingriff steht, um eine Gleitstütze für die Stange zu bilden, wobei diese Stange auf der besagten Seite eine im allgemeinen ebene Fläche (64) aufweist, welche eine Längsrille (66) und ein Paar von länglichen, schmalen, Abstand haltenden und parallelen Rippen (68, 70) trägt, die gleitend mit dem Tragstück im Eingriff stehen, wobei das Tragstück ein fester zylindrischer Stift (62) ist.

6. Kopf gemäss Anspruch 5, gekennzeichnet durch einen ersten Kontakt einer harten Kugel (74), welcher auf dem Tastglied in einer Lage, um in die Bohrung einzugreifen, und diametral gegenüber dem einstellbaren Fühlglied montiert ist, einen zweiten Kontakt einer harten Kugel (92), welcher am äusseren Ende des einstellbaren Fühlgliedes in einer Lage, um in die Bohrung einzugreifen, und diametral gegenüber dem ersten Kugelkontakt angeordnet ist, und eine Blattfeder (38), welche das Tastglied mit dem Körper verbindet, sich im allgemeinen parallel zur Stange ausdehnt und in der Lage ist, sich von der Stange zu entfernen oder sich ihr zu nähern.

7. Kopf gemäss Anspruch 1, dadurch gekennzeichnet, dass die Zentriermittel (112) einen U-förmigen Arm mit einem Paar von parallelen Schenkeln (114 und 116) und einem Querstück (118) an einem Ende umfassen, wobei Drehzapfen das andere Ende der Schenkel mit dem Körper verbinden, die Schenkel sich im allgemeinen parallel zur Stange und entlang gegenüberliegenden Seiten des Körpers ausdehnen und das Querstück nahe am äusseren Ende des Körpers angeordnet ist, und wobei eine Feder zwischen Arm und Körper angeordnet ist, um den Arm von äusseren Ende des Körpers wegzudrücken.

8. Kopf gemäss Anspruch 7, dadurch gekennzeichnet, dass der Arm eine Rille (138, 140) auf jedem Schenkel am genannten einem Ende und quer zum Schenkel und eine zentrierende für eine beschrankte Querbewegung in jeder dieser Rillen geeignete Kugel (134, 136) aufweist, wobei je ein Teil der Zentrierkugeln aus den zugehörigen Rillen herausragt, um gleichzeitig gegen den Körper und die Bohrung zu drücken, wenn der Kopf in der Bohrung ist, wobei die Zentrierkugeln und der erste und der zweite Kugelkontakt in der gleichen Ebene angeordnet sind, wobei der Körper eine Spur (142, 144) aus gehärtetem Metall aufweist, die an jeder Zentrierkugel anliegt und mit ihr im Eingriff steht, wobei Anschlage betriebsmässig am Kopf vorgesehen sind, um die Bewegung des Armes um die Drehzapfen zu begrenzen, und wobei eine halbzylinderförmige Rille auf jeder Seite der V-Rille angebracht ist, um ein Paar von halbzylinderförmigen, abstandshaltigen und parallelen Rillen zu bilden, entlang welchen der genannte kugelförmige Teil sich bewegen kann.

9. Kopf für ein Bohrungsstichmass mit einem beweglichen Teil ausgebildet um eine dem Wert der Verschiebung des Teiles entsprechende Messangabe zu liefern, einem Körper und Verbindungsmitteln, um betriebsmässig den Körper dem Stichmass zu verbinden, gekennzeichnet durch eine Uebertragungsstange, die im Körper für eine begrenzte Längsbewegung montiert ist und bewegungsmässig an einem Ende mit dem beweglichen Teil verbunden ist, ein in die Bohrung einsetzbares Tastglied, welches beweglich und federnd am äusseren Ende des Körpers und auf einer seiner Seiten montiert ist und mit dem anderen Ende der Stange bewegungsmässig verbunden ist, ein einstellbares in die Bohrung einsetzbares Fühlglied, welches am äusseren Ende des Körpers auf der entgegengesetzten Seite des Kopfes in diametraler Ausrichtung mit dem Tastglied montiert ist, einen U-förmigen Zentrierarm mit einem Paar paralleler Schenkel und ein Querstück an einem Ende, Drehzapfen, welche die anderen Enden der Schenkel mit dem Körper verbinden, wobei die Schenkel im allgemeinen parallel zur Stange und entlang entgegengesetzten Seiten des Körpers und des Fühlgliedes ausgelegt sind und das Querstück nahe beim äusseren Ende des Körpers angeordnet ist, eine Feder, welche zwischen Arm und Körper angebracht ist, und das eine Ende des Armes vom äusseren Ende des Körpers wegstosst, wobei der Arm an diesem Ende in jedem Schenkel eine quer zu den Schenkeln liegende Rille trägt, und zwei Zentrierkugeln, wovon je eine für eine beschränkte Querbewegung in jeder dieser Rillen montiert ist und einen Teil besitzt, der aus der zugehörigen Rille herausragt, um gleichzeitig gegen den Körper und die Bohrung zu drücken, wenn der Kopf in die Bohrung eingesetzt ist.

10. Kopf gemäss Anspruch 9, dadurch gekennzeichnet, dass der Körper eine Hartmetallspur aufweist, welche in jeder Zentrierkugel, um mit ihr im Eingriff zu sein, anliegt, dass Anschläge die Drehzapfen betriebsmässig mit dem Kopf verbinden, wobei das andere Ende der Uebertragungsstange diagonal eine V-förmige Rille trägt, wobei das Tastglied am Körper drehbar montiert ist und einen als Kugelabschnitt ausgebildeten Teil besitzt, der in dieser Rille liegt, wodurch jede Drehbewegung des Tastgliedes in eine lineare Bewegung der Stange verwandelt wird, wobei ein Tragstück quer zur Stange am Körper montiert ist und entlang einer Seite der Stange, anliegend an ihrem einen Ende und entgegengesetzt zur Rille für die Stange eine gleitende Stütze bildet, wobei eine Seite der Stange allgemein flach ausgebildet ist und eine Längsrille und ein Paar von schmalen, Abstand aufweisenden und parallelen Längsrippen aufweist, die gleitend mit dem Tragstück zusammenwirken, wobei das Tragstück als fester zylindrischer Stift ausgebildet ist, wobei ein erster Kontakt einer harten Kugel derart am Tastglied montiert ist, dass er diametral gegenüber dem einstellbaren Fühlglied an der Bohrung anliegt, wobei ein zweiter Kontakt derart am äusseren Ende des einstellbaren Fühlgliedes angebracht ist, dass er diametral gegenüber dem ersten Kugelkontakt an der Bohrung anliegt, wobei eine Blattfeder das Tastglied mit dem Körper verbindet, sich im allgemeinen parallel zur Stange ausdehnt und sich zur Stange oder von ihr weg bewegt, wobei die Zentrierkugeln und der erste und der zweite Kugelkontakt in der gleichen Ebene liegen und eine halbzylindrische Rille, der Länge nach, in jeder Seite der V-förmigen Rille angeordnet ist, um ein Paar von halbzylindrischen, Abstand haltigen parallelen Rillen zu bilden, entlang welchem der Kugelabschnitt sich bewegen kann.

**Revendications**

1. Tête de mesure pour une jauge d'alésage comportant une pièce mobile agencée pour fournir une indication de mesure correspondant à la valeur du déplacement de la pièce mobile, un corpe (18) et des moyens pour relier fonctionnellement le corps à la jauge, caractérisée par une tige de transmission (56) montée pour un mouvement longitudinal limité dans le corps et reliée pour son mouvement à une extrémité à cette pièce mobile, un palpeur d'alésage (48) monté de façon mobile à l'extrémité du corps et relié à l'autre extrémité de la tige de transmission (56) pour l'entraîner, une pièce ajustable (76) pénétrant dans l'alésage, montée à l'extrémité du corps sur le côté de la tête diamétralement opposé au palpeur d'alésage et alignée avec lui, un engrenage avec pignon et crémaillère (85, 88) entraîné manuellement et fonctionnellement associé avec la pièce ajustable (76) pour l'avancer ou la rétracter diamétralement vers ou loin du corps et des moyens de centrage (112) reliés au corps pour être en prise sur les parois de l'alésage et positionner le palpeur d'alésage et la pièce d'ajustage le long du diamètre de cet alésage.

2. Tête selon la revendication 1, caractérisée en ce que l'engrenage comprend une crémaillère (88) agencée le long de la pièce ajustable (76) parallèlement à son trajet de déplacement et un pignon (85) monté à l'extrémité du corps, engrené avec les dents de la crémaillère et pouvant être entraîné manuellement depuis ladite extrémité.

3. Tête selon la revendication 2, caractérisée par des moyens de blocage montés sur le corps et en prise avec la pièce ajustable pour la bloquer dans une position choisie, ces moyens de blocage comprenant un coin (98) monté dans ladite extrémité, adjacent à la pièce ajustable et pouvant se mettre en prise avec elle, et une vis (102) traversant le coin, vissée au corps et permettant de serrer sélectivement le coin contre l'élément ajustable et de le libérer.

4. Tête selon la revendication 3, caractérisée en ce que le coin possède une face (108) en prise avec l'élément ajustable portant au moins une rainure (111) délimitant au moins une paire de chants disposés pour être en prise avec l'élément ajustable et un ressort (110) monté fonctionnellement entre le coin et le corps pour pousser normalement le coin dans une position libérant le coin.

5. Tête selon la revendication 1, caractérisée en ce que l'autre extrémité de la tige de transmission est agencée avec une rainure diagonale en V (72), le palpeur d'alésage est fixé élastiquement au corps, peut pivoter par rapport à lui et comporte une partie sphérique (58) engagée dans ladite rainure, de sorte que chaque mouvement de pivotement du palpeur d'alésage est transformé en mouvement linéaire de la tige, un support étant monté sur le corps transversalement à la tige et étant en prise avec la tige le long d'un de ses côtés adjacent à cette autre extrémité et opposé à la rainure pour donner un support coulissant à la tige, la tige ayant une face pratiquement plane (64) sur ce côté, face portant une rainure longitudinale (66) et une paire de nervures longitudinales, étroites, espacées et parallèles (68, 70) engagées en coulissement avec le support qui est une goupille cylindrique rigide (62).

6. Tête selon la revendication 5, caractérisée par une première bille dure de contact (74) montée sur le palpeur dans une position pour toucher l'alésage de façon diamétralement opposée à la pièce ajustable, par une seconde bille dure de contact (92) à l'extrémité extérieure de la pièce ajustable dans une position pour toucher l'alésage de façon diamétralement opposée à la première bille de contact et une lame de ressort (38) reliant le palpeur au corps, la lame s'étendant pratiquement parallèlement à la tige et de façon qu'elle fléchit vers et loin de cette tige.

7. Tête selon la revendication 1, caractérisée en ce que les moyens de centrage (112) comprennent un bras en forme de U avec une paire de branches parallèles (114 et 116) et une pièce transversale (118) à une de leurs extrémités, un pivot reliant les autres extrémités des branches au corps avec les branches se prolongeant pratiquement en parallèle à la tige et le long des côtés opposés du corps et avec la pièce transversale placée vers l'extrémité du corps, et un ressort entre le bras et le corps obligeant la première extrémité des bras à s'écarter de l'extrémité du corps.

8. Tête selon la revendication 7, caractérisée en ce que le bras comporte, à sa première extrémité, une rainure (138, 140) dans chaque branche se prolongeant transversalement aux branches et une bille de centrage (134, 136) montée dans chacune des rainures avec une liberté limitée de mouvement transversal, chacune des billes de centrage ayant une portion dépassant hors de sa rainure respective pour porter en même temps contre l'alésage et le corps lorsque la tête est dans l'alésage, les billes de centrages ainsi que les première et seconde billes de contact étant placées dans un même plan, le corps comprenant une piste en métal durci (142, 144) adjacente à chacune des billes de centrage pour être en prise avec elles, des butées étant reliées à la tête pour limiter le mouvement du bras autour de son pivot, et une rainure semi-cylindrique agencée en longueur sur chaque face de la rainure en V pour délimiter une paire de rainures semi-cylindriques espacées et parallèles le long desquelles ladite portion de bille peut se mouvoir.

9. Tête pour une jauge d'alésage comportant en elle une pièce mobile agencée pour fournir une indication de mesure correspondant à la valeur du déplacement de la pièce mobile, un corps et des moyens pour relier fonctionnellement le corps à la jauge, caractérisée par une tige de transmission (56) montée pour un mouvement longitudinal limité dans le corps et reliée pour son mouvement avec une extrémité à cette pièce mobile, un palpeur d'alésage monté de façon mobile et élastique à l'extrémité du corps sur un de ses côtés et relié pour l'entraîner avec l'autre extrémité de la tige, une pièce ajustable pénétrant dans l'alésage, montée à l'extrémité du corps sur le côté de la tête diamétralement opposé au paleur d'alésage et alignée avec lui, un bras de centrage en forme de U avec une paire de branches parallèles et une pièce transversale à une de leurs extrémités, un pivot reliant les autres extrémités des branches au corps, les branches étant agencées pratiquement parallèles à la tige et le long de côtés opposés du corps et du palpeur et avec la pièce transversale disposée du côté de l'extrémité du corps, un ressort entre le bras et le corps obligeant une extrémité du bras à s'écarter de l'extrémité du corps, ce bras étant agencé avec une rainure transversale dans chaque branche à l'extrémité de la pièce transversale, et une bille de centrage montée pour un mouvement transversal limité dans chacune des rainures, chacune des billes de centrage ayant une portion dépassant hors de sa rainure pour porter en même temps contre le corps et contre l'alésage lorsque la tête est dans l'alésage.

10. Tête selon la revendication 9, caractérisée en ce que le corps comprend und piste de métal durci adjacente à chacune des billes de centrage pour qu'elles s'y engagent, des butées fixées fonctionnellement à la tête pour limiter le mouvement du bras autour du pivot, l'autre extrémité de la tige de transmission portant en diagonale une rainure en V, le palpeur étant monté pivotant sur le corps et comprenant une portion sphérique placée dans cette rainure en V de sorte que chaque mouvement pivotant du palpeur est converti en mouvement linéaire de la tige, un support étant monté sur le corps transversalement à la tige et en prise avec la tige le long d'un de ses côtés adjacent à ladite extrémité et opposée à la rainure en V pour fournir un support coulissant pour la tige dont ledit côté est pratiquement plat et porte une rainure longitudinale et une paire de nervures longitudinales, étroites, espacées et parallèles, en prise coulissante avec le support, qui est une goupille cylindrique rigide, un premier contact à bille dure étant monté sur le palpeur dans une position pour palper l'alésage et opposée diamétralement à la pièce ajustable, un second contact à bille étant agencé sur l'extrémité extérieure de la pièce ajustable dans une position pour toucher l'alésage diamétralement opposée au premier contact de bille, et une lame de ressort reliant le palpeur au corps, la lame étant allongée de façon pratiquement parallèle à la tige et disposée pour dévier vers ou au loin de la tige, les billes de centrage et les premier et second contacts de bille étant placés dans le même plan et une rainure semi-cylindrique étant agencée longitudinalement dans chaque face de la rainure en V pour délimiter une paire de rainures semi-cylindriques espacées et parallèles le long desquelles la portion sphérique peut se déplacer.

0 105 979

*FIG. 1.*

*FIG. 2.*

1

0 105 979

FIG. 3.

FIG. 4.

2

FIG. 5.

FIG. 6.

FIG. 7.

FIG. 11.

FIG. 8.

FIG. 9.

FIG. 10.

FIG. 12.

0 105 979

FIG. 13.

FIG. 14.